# EUROPEAN PATENT SPECIFICATION

(11) **EP 2 710 463 B1**
(45) Date of publication and mention of the grant of the patent: **06.06.2018**
(21) Application number: 12718487.7
(22) Date of filing: 10.04.2012
(51) Int. Cl.: G06F 9/44, G06F 9/445

(54) **INTEGRATED RENDERING OF STREAMING MEDIA IN VIRTUALIZED DESKTOP ENVIRONMENT**
INTEGRIERTE DARSTELLUNG VON STREAMING-MEDIA IN EINER VIRTUELLEN DESKTOPUMGEBUNG
RENDU INTÉGRÉ DE CONTENU MULTIMÉDIA EN DIFFUSION CONTINUE DANS UN ENVIRONNEMENT DE BUREAU VIRTUALISÉ

(30) Priority: 06.05.2011 US 201113102581
(43) Date of publication of application: 26.03.2014
(73) Proprietor: Cisco Technology, Inc., San Jose, CA 95134-1706 (US)
(72) Inventor: BAIRD, Randall, B., Austin, TX 78730 (US)
(74) Representative: Kazi, Ilya
(86) International application number: PCT/US2012/032845
(87) International publication number: WO 2012/154361

(56) References cited:
- US-A1- 2010 138 744
- GREENBERG I ET AL: "Adaptive Offloading for Pervasive Computing", IEEE PERVASIVE COMPUTING, IEEE SERVICE CENTER, LOS ALAMITOS, CA, US, vol. 3, no. 3, 1 July 2004 (2004-07-01), pages 66-73, XP011116151, ISSN: 1536-1268

## Description

### TECHNICAL FIELD

The present disclosure relates generally to virtualized desktop environments and more particularly to providing an integrated rendering of media such as streaming media in a browser on a client endpoint device.

### BACKGROUND

Web browsing is an increasingly popular activity in business and personal settings, and with the growth of network-connected devices such as personal computers, web-capable mobile phones and tablets has come increased demand for the provision of media over the web. For example, users may desire to conduct web-based audio and video conferencing, buy or rent movies or television shows over the web, view video or animation encoded for Adobe Flash, listen to streaming radio stations, or even play games with users around the world via the Internet.

When virtual or cloud-based desktops are used, web browsing may be virtualized along with other hosted applications. That is, a browser application may run in a hosted virtual desktop (HVD), or run as a hosted virtual application (HVA) while the browser window is displayed to a user on a remote client endpoint device such as a computer or mobile phone. Virtualized browsing presents a set of unique problems in that media such as streaming media may be more difficult to virtualize than simple text and graphics.

A method for playing multimedia content at a remote graphics display client is described in US 2010/0138744. An approach for offloading part of the execution of an application from a mobile device to a nearby surrogate is described in Gu et al. "Adaptive Offloading for Pervasive Computing", IEEE Pervasive Computing vol. 3, no. 3 (July 2004).

Aspects of the invention are set out in the independent claims. Certain preferred features are set out in the dependent claims.

### BRIEF DESCRIPTION OF THE DRAWINGS

FIG. 1 is an example of a block diagram showing a virtual desktop interface (VDI) environment in which VDI connectivity can be established between client endpoint devices and one or more hosted virtual desktops.
FIG. 2 is an example of a block diagram showing VDI, plugin protocol, HTTP, and content transport sessions among a particular hosted virtual desktop (HVD), client endpoint device, web server and content server in the VDI environment.
FIG. 3A is an example of a display including an HVD display comprising a browser window rendered by a hosted web browser including window elements rendered by the HVD, and a placeholder for window elements to be rendered by the client endpoint device.
FIG. 3B is an example of a client display including a modified HVD display window in which the placeholder has been replaced with client-provided content.
FIG. 4A is an example of a display in which the client endpoint device displays the composited HVD display and client-rendered content of the browser window as partially occluded by windows of other HVD applications.
FIG. 4B is an example of an alternate display in which the client endpoint device displays the browser window as partially occluded by windows of other HVD applications, and the client-rendered window elements are greyed-out from display.
FIGs. 5A and 5B are an example of a flow chart generally depicting establishment and management of a plugin protocol session by a stub plugin at the HVD.
FIGs. 6A and 6B are an example of a flow chart generally depicting establishment and operation of a plugin protocol session by a plugin server at the client endpoint device.
FIG. 7 is an example of a flow chart generally depicting conversion of a hosted browser to use a stub plugin and endpoint plugin in order to integrate rendering of media such as streaming media into a browser window.

### DESCRIPTION OF EXAMPLE EMBODIMENTS

### Overview

Techniques are provided for establishing an integrated rendering of a browser window comprising user interface elements such as streaming media on a client endpoint device. A web browser on a hosted virtual desktop (HVD) generates an HVD display image comprising a browser window and communicates it to the client endpoint device for display, via a virtual desktop interface (VDI) protocol. The browser window comprises a host-provided window element and a placeholder where client-provided data associated with a tag may be rendered. A client plugin server on the client endpoint device instantiates an endpoint browser plugin to render a tag in place of the placeholder portion of the HVD display, before displaying the integrated display of the browser window and rendered tag content at the client endpoint device.

Additional techniques are provided herein for rendering a web page comprising page content and a tag in a web browser on a hosted virtual desktop HVD, instantiating a stub plugin in the web browser, causing the stub plugin to render a placeholder into a portion of the browser window, establishing a plugin protocol session between the stub plugin and a plugin server on a client endpoint device, and sending information controlling the instantiation and operation of an endpoint plugin via the plugin protocol session, so that the client endpoint device can display a composited window of the web page.

### Example Embodiments

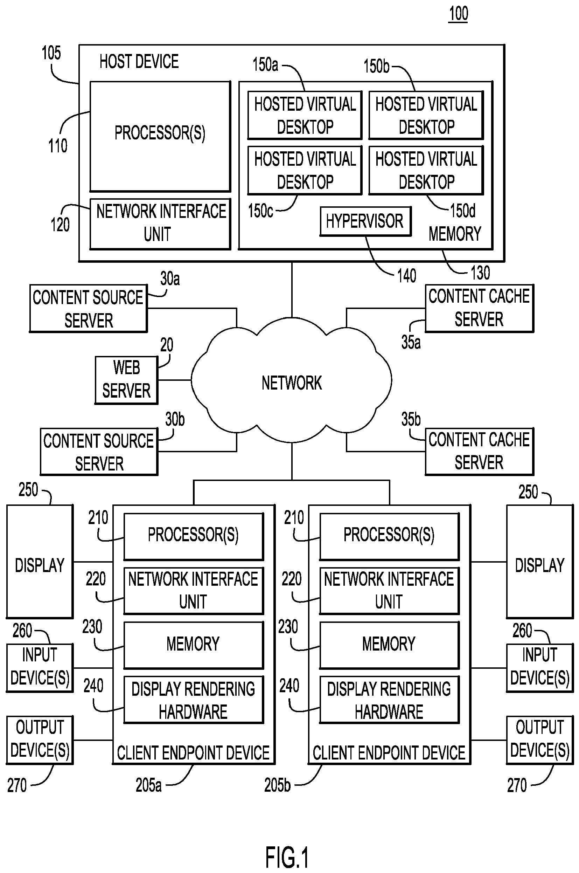

Referring now to the Figures, an example of a block diagram showing a VDI environment in which VDI connectivity can be established between client endpoint devices and one or more hosted virtual desktops is shown in FIG. 1. The depicted VDI environment 100 includes host device 105, client endpoint devices 205a, 205b, web server 20, content servers 30a, 30b, and content distribution cache servers 35a, 35b, which are connected over network 10 to each other. The VDI environment may include additional servers, clients, and other devices not shown, and individual components of the system may occur either singly or in multiples, for example, there may be more than one host device 105, and other networking components, e.g., routers and switches, may be used in the VDI environment 100.

Network 10 represents any hardware and/or software configured to communicate information via any suitable communications media (e.g., WAN, LAN, Internet, Intranet, wired, wireless, etc.), and may include routers, hubs, switches, gateways, or any other suitable components in any suitable form or arrangement. The various components of the VDI environment 100 may include any conventional or other communications devices to communicate over the networks via any conventional or other protocols, and may utilize any type of connection (e.g., wired, wireless, etc.) for access to the network.

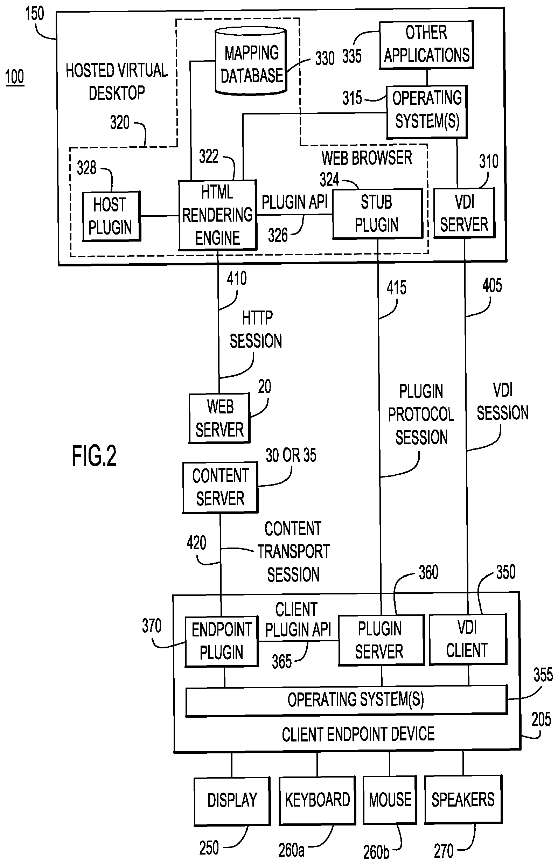

Web server 20 is a conventional or other server for serving web pages including Hypertext Markup Language (HTML) documents and other content such as images or style sheets to the web browser 320. Content source servers 30a, 30b are conventional or other servers for serving data to a client or a content distribution cache server, e.g., a Darwin Streaming Server, Flash Media Server, Unreal Media Server, or the like. The content servers may provide any type of data, for example media such as streaming video and/or streaming audio, games or simulations, scripts, or the like. Content cache servers 35a-b, e.g. Cisco Wide Area Application Engine (WAE) servers running the Application and Content Network System (ACNS), act as intermediate repositories for content received from content servers 30a-b. As is further described with respect to FIG. 2, the present embodiments transport data directly from content source servers 30 and/or content cache servers 35 to the client endpoint devices 205, without the data passing through the host device 105. By placing cache servers 35 at key points in network 10 and caching content (e.g., media content) from a content source server 30a-b, client endpoint 205a may receive content from the cache servers 35 instead of the content source 30, thereby reducing bandwidth consumption over the core portions of network 10. It is understood that many types of content servers 30 and distribution caches 35 stream media to clients; however, any type of content may be streamed.

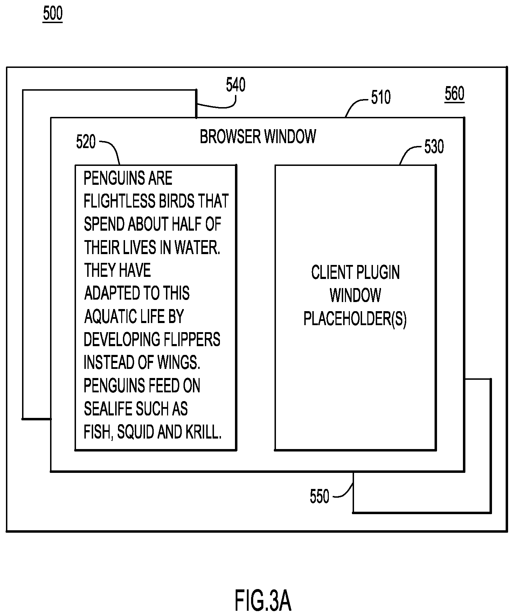

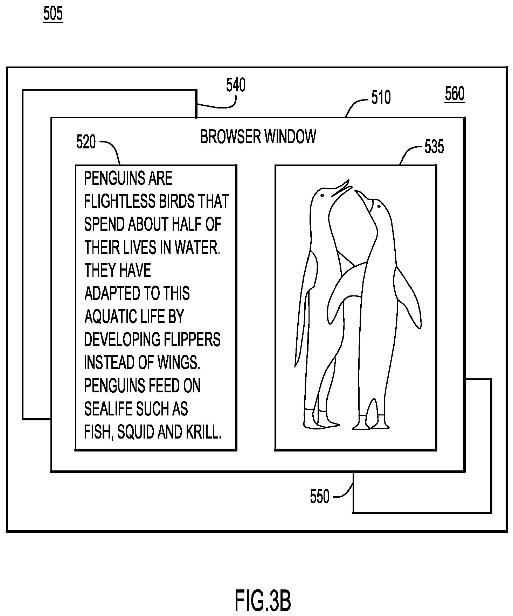

Host device 105 comprises one or more processors 110, a network interface unit 120, and memory 130. The processor 110 is, for example, a data processing device such as a microprocessor, microcontroller, system on a chip (SOC), or other fixed or programmable logic, that executes instructions for process logic stored in memory 130. The network interface unit 120 enables communication throughout the VDI environment, as shown in FIGS. 1 and 2. Memory 130 may be implemented by any conventional or other memory or storage device, and may include any suitable storage capacity. For example, memory 130 may comprise read only memory (ROM), random access memory (RAM), erasable programmable read-only memory (EPROM), magnetic disk storage media devices, optical storage media devices, flash memory devices, electrical, optical, or other physical/tangible memory storage devices. The memory 130 may comprise one or more computer readable storage media (e.g., a memory device) encoded with software comprising computer executable instructions and when the software is executed (by processor 110) it is operable to perform the operations described herein in connection with FIGS. 3-5 and 7.

The host device 105 may be, for example, a computing blade, a blade server comprising one or more solid state drives, or a blade center comprising one or more blade servers together with a blade chassis comprising common resources such as networking connections, input/output device connections, power connections, cooling devices, switches, etc. The host device 105 may be a component of a larger system, such as a Cisco Unified Computing System, or a data center that centralizes enterprise computing resources.

Resident in memory 130 are hypervisor 140, and multiple hosted virtual desktops (HVDs) 150a-d. The hypervisor or virtual machine monitor 140 presents a virtual operating platform to the HVDs 150a-d, and manages access to the host processor 110, network interface unit 120, memory 130 and other host resources, so that the HVDs 150a-d have access to appropriate host resources without disrupting each other's operation. Each HVD 150 operates independently of the other HVDs 150 and runs as a separate virtual machine on the host device 105, and each HVD 150 may run a different operating system if desired. Further operation of the HVDs is explained below with reference to FIGS. 3-5 and 7.

Each example client endpoint device 205a comprises one or more processors 210, a network interface unit 220, memory 230, and display rendering hardware 240. The processor 210 is, for example, a data processing device such as a microprocessor, microcontroller, system on a chip (SOC), or other fixed or programmable logic, that executes instructions for process logic stored in memory 230. The network interface unit 220 enables communication throughout the VDI environment, as shown in FIGS. 1 and 2. Memory 230 may be implemented by any conventional or other memory or storage device, and may include any suitable storage capacity. For example, memory 230 may comprise read only memory (ROM), random access memory (RAM), erasable programmable read-only memory (EPROM), magnetic disk storage media devices, optical storage media devices, flash memory devices, electrical, optical, or other physical/tangible memory storage devices. The memory 230 may comprise one or more computer readable storage media (e.g., a memory device) encoded with software comprising computer executable instructions and when the software is executed (by processor 210) it is operable to perform the operations described herein in connection with FIGS. 3, 4 and 6. Display rendering hardware 240 may be a part of processor 210, or may be, e.g., a separate graphics processor, e.g., a Graphics Processor Unit (GPU).

The example client endpoint device 205 may be any conventional or other computer system or device, such as a thin client, computer terminal or workstation, personal desktop computer, laptop or netbook, tablet, cellular phone, set-top box, networked television, or other device capable of acting as a client in the described VDI environment.

The example client endpoint device 205 interfaces with display device 250, input device(s) 260, and output device(s) 270, and communicates with these devices in any suitable fashion, e.g., via a wired or wireless connection. The display device 250 may be any suitable display, screen or monitor capable of displaying information to a user of a client endpoint device, for example the screen of a tablet or the monitor attached to a computer workstation. Input device(s) 260 may include any suitable input device, for example, a keyboard, mouse, trackpad, touch input tablet, touch screen, camera, microphone, remote control, speech synthesizer, or the like. Output device(s) 270 may include any suitable output device, for example, a speaker, headphone, sound output port, or the like. The display device 250, input device(s) 260 and output device(s) 270 may be separate devices, e.g., a monitor used in conjunction with a microphone and speakers, or may be combined, e.g., a touchscreen that is a display and an input device, or a headset that is both an input (e.g., via the microphone) and output (e.g., via the speakers) device.

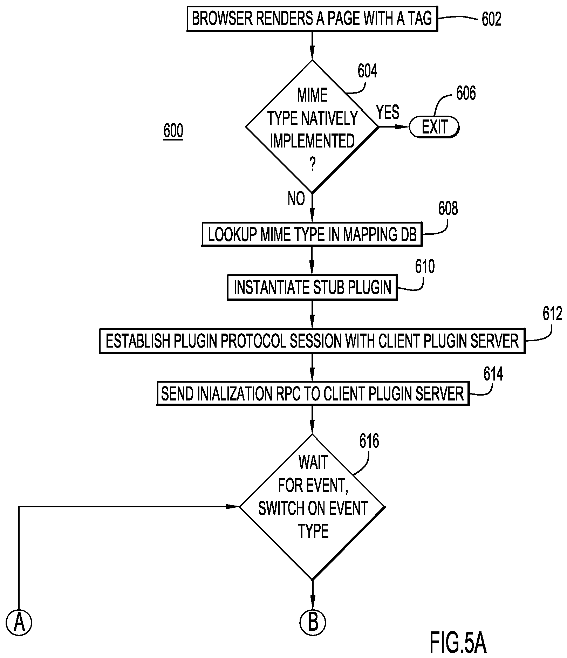

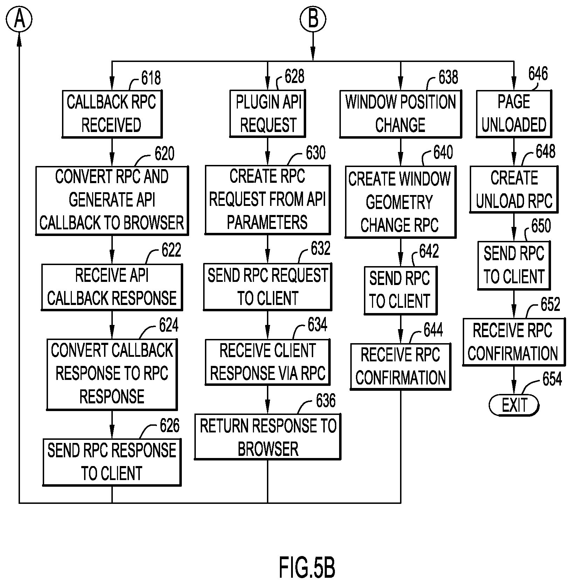

The functions of the processors 110 and 210 may each be implemented by a processor or computer readable tangible (non-transitory) medium encoded with instructions or by logic encoded in one or more tangible media (e.g., embedded logic such as an application specific integrated circuit (ASIC), digital signal processor (DSP) instructions, software that is executed by a processor, etc.), wherein the memories 130 and 230 each store data used for the computations or functions described herein (and/or to store software or processor instructions that are executed to carry out the computations or functions described herein). Alternatively, one or more computer readable storage media are provided and encoded with software comprising computer executable instructions and when the software is executed operable to performing the techniques described herein. Thus, functions of the process logic as described with reference to FIGS. 5 through 7, for example, may be implemented with fixed logic or programmable logic (e.g., software or computer instructions executed by a processor or field programmable gate array (FPGA)).

FIG. 2 is an example of a block diagram showing virtual desktop interface (VDI), plugin protocol, Hypertext Transfer Protocol (HTTP) and content transport sessions among a HVD 150, client endpoint device 205, web server 20, and content server 30, 35 in the VDI environment 100. For purposes of simplification, the other components of the VDI environment 100, e.g., other client endpoint devices, are not shown here. Further, although the description refers to the interaction between one HVD 150 and one client endpoint device 205, it is understood by those skilled in the art that each HVD 150 may interact with one or more client endpoint devices 205, and each client endpoint device 205 may interact with one or more HVDs 150 on a single or multiple host devices 105. Moreover, there may be more than one web server 20 and more than one content server 30 in the VDI environment 100.

The example HVD 150 comprises a VDI server 310; host operating system(s) 315; hosted web browser 320 further comprising HTML rendering engine 322, mapping database 330, host plugin 328, and stub plugin 324; and may also comprise one or more other application(s) 330. The example client endpoint device 205 comprises a VDI client 350, operating system(s) 355, and plugin server 360 (also called plugin element 360), which is connected via a client plugin application programming interface (API) 365 to endpoint plugin 370, all of which reside in memory 230 (as shown in FIG. 1), and also comprises a display 250, input devices including keyboard 260a and mouse 260b, and output devices including speakers 270.

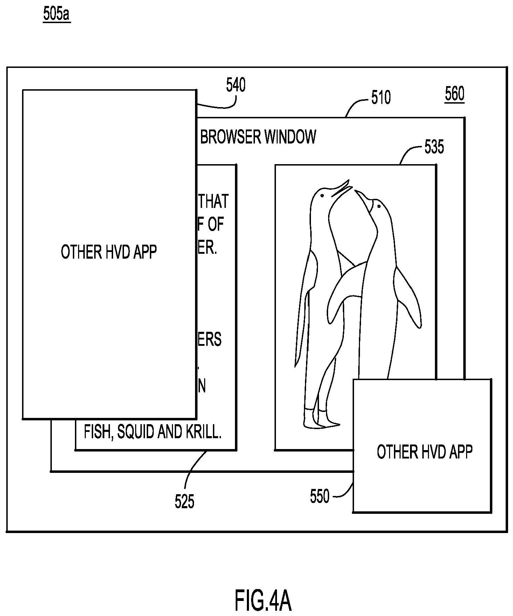

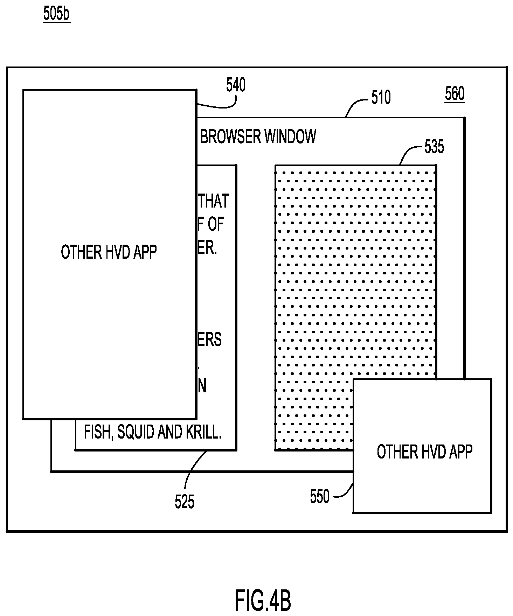

The VDI server 310 interacts with the host operating system 315 to provide virtual desktop interface functionality to the client endpoint device 205 over VDI session 405, which is a VDI protocol link that is established using any suitable VDI protocol, for example Citrix Independent Computing Architecture (ICA), VMWare PC over IP (PCoIP), Microsoft Remote Desktop Protocol (RDP), or other suitable protocol. For example, any application with which a user of the client endpoint device 205 is interacting is hosted by the HVD 150, while the window associated with the application is rendered by the client endpoint device 205. The windows are depicted and further described with reference to FIGS. 3 and 4. The VDI server 310 on the host may, for example, receive HVD display output from the host operating system 315 and send it to the VDI client 350 as an HVD display over VDI session 405. The VDI session may, for example, represent all windows in the HVD display as a single image, or it may indicate the position and size of each host-provided window element and placeholder in the HVD display, and/or the position and size of each client-provided window element and placeholder to be overwritten in the HVD display.

The VDI client 350 interacts with client operating system 355, plugin server 360 and endpoint plugin 370 to render the received HVD display for display on the client endpoint device 205. As will be further described with reference to FIGS. 3 and 4, the plugin server 360 and endpoint plugin 370 may also modify the received HVD display, for example by rendering a client-provided window element, e.g., a video element for displaying streaming media, in place of a placeholder portion of the HVD display, prior to rendering it for display. The VDI client 350 also receives user input from the user interface, for example, the user types on keyboard 260a or exercises mouse 260b, and these inputs are translated by the VDI client 350 and sent to the VDI server 310 via VDI session 405.

After it receives the user input, VDI server 310 translates it into virtual keyboard and mouse inputs, and feeds it via host operating system 315 to host web browser 320 or another application 335, as if the applications and the input devices 260 were running on a single desktop computing device. The user inputs are processed by the appropriate application at the HVD, and HVD display images are generated by the operating system 315 and VDI server 310 for transmission back to the VDI client 350, which renders the HVD display and client-generated user elements for display to the user on display 250.

In another embodiment, host device 105 may execute hosted virtual applications (HVAs) from its memory 130, rather than full hosted virtual desktops 150. In this embodiment, client endpoint device 205 may use its VDI client 350 to interact with multiple host devices 105, each executing one or more HVAs, and use the client operating system 350 to composite the output of the HVAs to present a full windowed desktop on display 250.

The host web browser 320 may be any browser software capable of use in conjunction with the host operating system 315, for example Mozilla Firefox, Google Chrome, Microsoft Internet Explorer, Opera Software Opera, Apple Safari, etc., and it comprises an HTML rendering engine 322. When a user of client endpoint device 205 navigates to a web page in a displayed browser window using, e.g., a web address such as a Uniform Resource Identifier (URI), the HTML rendering engine 322 requests and receives from HTML server 20, for example, an HTML- or XHTML-encoded web page associated with the URI, over HTTP session 410. The web pages may contain a reference to an object that cannot be decoded natively by the HTML rendering engine 322, for example a tag such as an <object> or <embed> tag whose URI references content server 30, or whose Multipurpose Internet Mail Extension (MIME) type indicates a type of object (e.g., audio, video, Java, etc.) that cannot be decoded natively, or for a particular embodiment is not desired to be decoded natively. When the host web browser 320 encounters such an object, it refers to mapping database 330 to find an entry describing the plugin to render the object, and, if environment 100 is configured to execute and and/or render that object type on client endpoint device 205, it then instantiates the stub plugin 324 in the host web browser 320, and communicates with the stub plugin 324 via plugin API 326. This plugin API 326 is a bidirectional API, allowing the rendering engine 322 to make requests of the stub plugin 324, while also allowing the stub plugin 324 to signal events to the rendering engine 322 via a callback mechanism.

It is understood that web browser 320 will instantiate stub plugins only for those object types for which local execution on client endpoint device 205 is desired in a particular implementation. For all other object types, referral to mapping database 330 yields a host plugin 328 for that object type, which is instantiated and executed on the HVD 150. It is understood that in some implementations a particular object type may be executed on the host (via host plugin 328), whereas in other implementations the same object type may be associated with a stub plugin 324 for execution on the client endpoint device 205.

After instantiation, stub plugin 324 establishes a plugin protocol session 415 with the plugin server 360 resident on the client endpoint device 205. The plugin protocol session 415 may be established using any suitable protocol, for example HTTP, TLS, TCP, or any other suitable protocol. In one embodiment plugin protocol session is multiplexed into a virtual channel transported by VDI session 405. The plugin protocol comprises methods to identify the type of endpoint plugin 370 to be instantiated, to describe the location of one or more placeholder objects into which the endpoint plugin 370 should render its data and interact with the user, to identify a URI describing the location of the content server 30, 35 associated with a particular tag, and to transport application programming interface (API) requests between web browser 320 and endpoint plugin 370. The API requests may be specific to a browser or class of browsers and may support interfaces, for example, for Netscape Plugin API (NPAPI) for Mozilla Firefox and Seamonkey, Apple Safari, Google Chrome, and Opera Software Opera browsers; the Pepper Plugin API (PPAPI), for Google Chrome and open source Chromium browser; or the ActiveX API, for Microsoft Internet Explorer. These interfaces may be bidirectional, i.e., web browser 320 may make requests of endpoint plugin 370, and endpoint plugin 370 may make requests of web browser 320. A set of remote procedure calls (RPCs) may be used for communication of the APIs over this session 415 In one embodiment, the plugin protocol session 415 may be transported as a virtual channel within the VDI session 405, and in another embodiment the plugin protocol session 415 may be transported independently.

The plugin server 360 instantiates endpoint plugin 370 in response to interactions with the stub plugin 324 over plugin protocol session 415, and communicates with endpoint plugin 370 via a client plugin API 365. This plugin API 365 is a bidirectional API, allowing the plugin server 360 to make requests of the endpoint plugin 370, while also allowing the endpoint plugin 370 to signal events to the plugin server 360 via a callback mechanism. The plugin server 360 may be, for example, a software module or an element of a software module, and may be, for example, a stand-alone module, a part of another software module associated with client endpoint device 205, or a combination of both.

The endpoint plugin 370 is a browser plugin that is designed to render or interact with one or more MIME types that are not able to, or not desired to, be decoded natively by an HTML rendering engine 322, and which could not be rendered efficiently by a plugin executing on the HVD 150, for example a video plugin. Depending on the host and client operating systems 315, 355, a suitable plugin to be used as endpoint plugin 370 may be available "off-the-shelf" for use, or a plugin may need to be ported to the client operating system 355. In certain embodiments it is desirable to run an off-the-shelf plugin as endpoint plugin 370, in order to minimize development costs, simplify software distribution from existing repositories, and maximize the number of plugins for various MIME types that can be supported on the client endpoint device 205. However, in order to use an off-the-shelf plugin without rewriting it, the plugin server 360 and the client operating system 355 should provide an endpoint plugin API 365 and operating system 355 that is compatible with (e.g., the same as) the API expected by the off-the-shelf endpoint plugin 370.

The host browser 320 operates in conjunction with the endpoint plugin 370 to display the non-native object to the user of client endpoint device 205. When HTML rendering engine 322 calls a procedure in plugin API 326, stub plugin 324 converts that procedure call and its parameters to, for example, a remote procedure call (RPC) in the plugin protocol 415. When plugin server 360 receives such an RPC, it converts it to a procedure call on the client plugin API 365 to the endpoint plugin 370. Similarly, if endpoint plugin 370 makes a callback to plugin server 360, plugin server 360 may generate an RPC over plugin protocol session 415, which is in turn received by stub plugin 324, which converts it to a callback of plugin API 326 to HTML rendering engine 322. It is appreciated, therefore, that the plugin API 326 and the client plugin API 365 should be compatible.

In the example, responsive to commands made by client plugin API 365, endpoint plugin 370 establishes a content transport session 420 directly with content server 30. It is understood that content server 30 could also be a content cache server 35a-b with no substantial difference in the rest of the example. Thus, the content (e.g., media) data flows directly to client endpoint device 205, rather than flowing through the HVD 150 and thus requiring a very high bitrate from the VDI session 405. When the endpoint plugin 370 decodes and renders the data, the rendered data is sent to client operating system 355 to be merged with the rest of the HVD display, which is being rendered by VDI client 350. The data may be encoded or compressed in any suitable fashion, and transmitted via any suitable protocol, for example HTTP, Microsoft Media Services (MMS), MPEG-Transport Stream (MPEG-TS), the Real-time Transport Protocol (RTP), User Datagram Protocol (UDP), or any other suitable protocol.

As can be seen from FIG. 2 and the preceding description, the present embodiments provide an improved system architecture as compared to conventional systems delivering content to HVDs. In conventional systems, content such as streaming media is transported from content servers to a host device, where it is decoded and rendered by a browser in an HVD using a host plugin, e.g., an Adobe Flash plugin, before being re-encoded and transmitted to a client device over a VDI session. These conventional systems exhibit a number of disadvantages, such as high network loads, inefficient use of content cache servers, degraded HVD scalability due to increased computational load on host devices, etc.

As compared to conventional methods that route content such as media from content servers through the HVD and over a VDI session to the client endpoint, the present embodiments use the content transport session 420 to directly transport content data to the client endpoint 205. This direct transportation of content to client endpoint devices has several benefits. First, using the content transport session 420 consumes less network bandwidth because it can maintain the native encoding of the content server, rather than forcing it to be transcoded to conform to the encoding used by the VDI session 405. Second, use of the content transport session 420 allows for Quality of Service (QoS) differentiation between regular VDI services and content delivery services. Third, transmitting content data directly to the client endpoints avoids needless concentration of bandwidth at a centralized location such as a host device 105 where multiple HVDs may be located. Fourth, using the content transport session 420 avoids placing high computing loads (e.g., media decode/encode loads) on the HVD, and thus avoids scalability problems on the HVD devices. Fifth, because the VDI session 405, HTTP session 410, plugin protocol session 415, and content transport sessions 420 are separate from each other, different network paths may be used for VDI communication, remote procedure calls, and content transmission. Sixth, the transport of content directly to the client endpoint devices allows efficient usage of cache server topology to reduce overall bandwidth across the network.

The various operating systems mentioned with reference to FIG. 1 and FIG. 2, such as the host operating system(s) 315 and the client operating system(s) 355 may be any suitable operating system for use in the VDI environment 100, such as, for example, a FreeBSD, Linux, OS X, UNIX, Windows, or other operating system. The operating system may be a standard operating system, an embedded operating system, or a real-time operating system. For example, the host operating system 315 may be a Linux operating system such as Ubuntu or Red Hat Enterprise Linux, a Mac operating system such as OS X or OS X Server, or a Windows operating system such as Windows 7 or Windows Server 2008 R2. The client operating system 355 may be, for example, a Blackberry, Linux, OS X, Windows, or other operating system. In one embodiment, the client operating system 355 is a flavor of Linux, such as Android, MeeGo, ThinStation, Ubuntu, webOS, or the like. In another embodiment, the client operating system 355 is an Apple operating system, such as OS X, iOS, or the like, or a Windows operating system, such as Windows 7, Windows CE, Windows Vista, Windows XP, or Windows XPe.

The tag corresponding to the content data, will of course differ depending on the page fetched from web server 20, and comprises a MIME attribute that specifies a MIME type for the tag. Most conventional browsers can process an <object> or <embed> tag having, e.g., a MIME type such as application, audio, model, or video. There are numerous subtypes with these MIME types, for example, the application type includes hundreds of subtypes, e.g., for Flash, Silverlight, etc., and the video type includes dozens of subtypes, e.g., CCTV, H264, mp4, QuickTime, etc. A full list of MIME types (also known as internet media types) and subtypes is available from the Internet Corporation for Assigned Names and Numbers, also known as ICANN, at their website. In a preferred embodiment the tag has a MIME type of application or video, and in another preferred embodiment the tag has a MIME subtype of Flash, H264, JavaScript, mp4, Quicktime, RealPlayer, Shockwave, Silverlight, or Windows Media Player. In another preferred embodiment, the tag has a MIME type indicating telephony, video conferencing, or web-based push-to-talk. In yet another preferred embodiment, the MIME type indicates a game or simulation.

Although the description herein refers to a single endpoint plugin 370 for rendering the tag, it is understood that multiple endpoint plugins 370 may be instantiated, of the same or differing types, while displaying and interacting with a single web page. It is understood that, in the case where multiple endpoint plugins 370, either of the same or different types, are instantiated on the client endpoint device 205, a single type of stub plugin 324 can accommodate all of the MIME types to be supported, and that a single plugin server 360 can similarly accommodate as many types of endpoint plugins as are deemed appropriate for a particular embodiment. It is also understood that not all plugin types are appropriate for local rendering, and that any mixture of plugins hosted on both the host virtual machine 150 and the client endpoint device 205 can be supported.

FIG. 3A is an example of an HVD display 500, including HVD display of a browser window as rendered by the HVD, and FIG. 3B is an example of an endpoint display 505, as modified and rendered by the client endpoint device for display to the user. It will be appreciated that HVD display 500 is a virtual display, and the depicted representations of the various elements in the display do not necessarily comprise a simple bitmap of the display. In a Microsoft Windows HVD, the GUI elements may be represented by Graphics Device Interface (GDI) drawing commands and/or Direct3D graphics commands. VDI server 310 may further process these representations to enable their transmission over VDI session 405.

In particular, FIG. 3A is an example of an HVD display 500 comprising a browser window 510 rendered by a hosted web browser, and further comprising zero or more web page elements 520 rendered by the hosted web browser's HTML rendering engine 322, or by a plugin 328 executing in the hosted browser, and at least one placeholder element 530, rendered by stub plugin 324, where a client-provided window element such as a plugin display window may be rendered. The display 500 may also comprise windows 540, 550 drawn by other HVD applications, and HVD background desktop image 560 which serves as the background image for the HVD display 500. The HVD 150 may send the HVD display 500 including a placeholder element 530 over the VDI session 405. Information about the size and placement of placeholder element 530 for a client-provided window element may be sent over the plugin protocol session 415.

FIG. 3B is an example of a display 505 including a modified HVD display for display by the client endpoint device 205, in which the placeholder 530 has been replaced by a client-provided display element 535, which is rendered by endpoint plugin 370. Display element 535 may be rendered as a borderless window, that is, a window with no framing decorations associated with it. The visual replacement of the placeholder with the client-rendered display element 535 may be accomplished in several ways. For example, the client endpoint device 205 may render the display element 535 over the placeholder portion 530 of the display 505, or it may render the display element 535 first and then render display 505 over the display element 535 with a "hole" in the display 505 where the display element 535 is located, or in any other suitable fashion to provide the appearance of an integrated display.

In the depicted example, the display element 535 is a plugin display window 535 filled with the media data rendered by the endpoint plugin 370, which in the depicted example is video data (e.g., CCTV, H264, mp4, QuickTime, etc.), but may also be any other type of data, such as Flash, JavaScript, or Silverlight. Furthermore, users may interact directly with the display plugin window using endpoint input devices such as a mouse or keyboard, rather than interacting with the HVD through the VDI session 405. Such interaction may occur when it is determined that the display plugin window has been granted focus, i.e. when the operating system determines that user input should be directed at a process in which the plugin is executing.

Although the depicted examples are of visual display elements, it will be understood that a similar compositing process takes place for audio. Client endpoint device 205 may receive audio, comprising, for example, application tones, music, or voice alerts, from HVD 150, via VDI session 405. Client endpoint device 205 may also receive audio content from a content server 30/35, via content transport session 420. Client endpoint device 205 should combine the audio from these two sources and render a coherent audio waveform to speakers 270. The two sources may, for example, be mixed by operating system 355, using audio rendering hardware in client endpoint device 205.

FIGS. 4A and 4B are alternative examples of displays 505a, 505b in which the client endpoint device 205 displays a composite of the HVD display comprising a browser window 510 as well as windows 540, 550 drawn by other HVD applications. In FIG. 4A, for example, the application windows 540, 500 have been brought to the foreground of the display through recent user interaction, and now partially occlude the browser window 510. Because the VDI server 310 may composite all applications on the HVD 150 into a single HVD display, which is then communicated to the client endpoint device 205, placeholder window 530 may not be a simple rectangle, implying that the compositing of client-provided element 535 cannot be accomplished by requesting that client operating system 355 render a simple rectangle on top of the HVD display, as was the case in FIG. 3B. Because the client endpoint device 205 is responsible for rendering both the HVD display 505 and the client-provided display elements 535, the ability of the client endpoint to render the complete display depends on multiple factors including the client operating system 355, the display rendering hardware 240, and the like.

In particular, it is the responsibility of the client operating system 355 to accomplish compositing. In most windowed operating systems, compositing is accomplished by the operating system drawing each individual window according to a z-order, which describes the relative depth of the various windows. Windows with the deepest (lowest) z-order are drawn first, and then each window with a successively shallower (higher) z-order is drawn subsequently, which may result in the deeper windows being partially or fully occluded on the display. The assignment of higher-valued integers to shallower windows is somewhat arbitrary, but higher z-order shall herein be understood to imply shallower windows, i.e., windows stacked closer to the user's eyes.

It should be appreciated, however, that the VDI client 350 receives all virtual display information (i.e., the HVD display comprising browser window 510 with host-rendered element 520 and placeholder element 530, other HVD application windows 540, 550, and the HVD background desktop image 560) from VDI session 405 and requests the client operating system 355 to render the entire virtual display as a single rectangular window. Thus, although window 540 or 550 may have a higher z-order on the HVD than the browser window 510, the client endpoint device 205 (comprising, e.g., plugin server 360, endpoint plugin 370, and operating system 355) may composite the endpoint-rendered element 535 so that the composited images have a higher z-order than the HVD display.

The client endpoint device 205 creates the appearance that endpoint-rendered element 535 is partially occluded, however, by rendering either the endpoint-rendered element 535 or the remainder of display 505a as non-rectangular shapes. For example, the client endpoint device 205 may composite the endpoint-rendered element 535 in only the non-occluded portions of the placeholder element 530. This means that, for example as shown in FIG. 4A, the endpoint-rendered element 535 may be rendered as a non-rectangular shape, for example, in FIG. 4A, the client user element 535 has been rendered into an irregular hexagonal placeholder window due to the occlusion of the lower right corner by the window 550. Alternatively, the client endpoint device 205 may render the endpoint-rendered element 535 as a rectangular shape, and then render the remainder of display 505a with a non-rectangular "hole" over the portion of the endpoint-rendered element 535 desired to be displayed.

To efficiently render display 505a, the client operating system 355 should be able to accept requests to render non-rectangular images without interfering with the images on the rest of the display. The plugin server 360 should therefore be able to be informed of the non-rectangular geometry, so that this information may be communicated to the operating system 355. In one example, the stub plugin 324 interacts with HVD operating system 315 to compute the geometry of the non-occluded portions of the placeholder window and communicates that window geometry information to the plugin server 360 over the plugin protocol session 415. In another example, stub plugin 324 fills placeholder window 530 with a unique chromakey color, so that plugin server 360, endpoint plugin 370, or operating system 355, may compute the non-rectangular region by detecting what portions of the virtual display contain the chromakey color. Operating system 355 should also be able to render the non-rectangular images at high speed and at a low impact to the CPU of the client endpoint device 205. In one example of such an efficient rendering, operating system 355 is aware of display rendering hardware 240, which comprises, for example, a graphics processing unit (GPU) capable of rendering non-rectangular images.

In alternative FIG. 4B, the client endpoint device 205 has a configuration that cannot handle the occlusion of the browser window 510. This may occur if, for example, the client endpoint device 205 does not have the capabilities necessary to handle the compositing and occlusion necessary to achieve the embodiment of FIG. 4A, because, for example, the endpoint plugin 370 is an off-the-shelf plugin that has not been modified, the client operating system 355 or display rendering hardware 240 cannot handle the required interactions, etc. Instead of occlusion, in this alternative embodiment the client endpoint device 205 instead renders the plugin display window 535 as a greyed-out (dotted) region. In this embodiment, clicking on the first or second window 540, 550 to make them the active window will bring them to a higher z-order than the browser window 510, and will pause the rendering of the endpoint-rendered data, causing the plugin display window 535 to be greyed-out. If the user clicks back on the browser window 510 in order to make it active, it will resume the highest z-order and re-enable the endpoint plugin 370, causing it to render the media data in the plugin display window 535 again.

FIGs. 5A and 5B illustrate an example of a flow chart generally depicting process 600 for the establishment and management of plugin protocol session 415 by the stub plugin 324 at the HVD 150. In step 602, the web browser 320 renders a webpage with a tag, for example an <object> or <embed> tag, and in step 604 determines whether the MIME type of the tag can be natively implemented by the HTML rendering engine 322. This determination is possible because the tag attributes include MIME type. If the determination is yes, then the process 600 exits at step 606, which may, e.g., terminate the process 600 or may return to waiting for the browser 320 to render another tag. If the determination is no, then in step 608 the browser 320 looks up the MIME type in the mapping database 330 to find its associated record. The database record specifies for each MIME type whether to call an executable file (e.g., host plugin 328) or the stub plugin 324, and if the stub plugin 324 is to be called, the record further comprises indicia of an associated endpoint plugin capable of rendering the MIME type. It will be understood that instantiation of the stub plugin 324 is essentially no different from the instantiation of any other plugin to be executed on the HVD 150. Whether the stub plugin 324 is instantiated depends solely on whether the entry for the MIME type in the mapping database 330 points to the stub plugin 324 or to some other plugin to be executed natively in the context of the HVD 150. In step 610 the browser 320 instantiates (loads) and initializes the stub plugin 324 via plugin API 326. The parameters to the initialization request specify the window coordinates and size for the plugin display window 535 for which the stub plugin 324 is responsible.

The initialization causes the stub plugin 324, in step 612, to establish a plugin protocol session 415 with plugin server 360. It will be understood that the transport of protocol session 415 may take many embodiments, including, but not limited to, use of HTTP, TLS, TCP, or multiplexing onto a virtual channel of VDI session 405. In step 614 stub plugin 324 sends an initialization remote procedure call (RPC), which contains both the initialization parameters from plugin API 326 and additional parameters indicating which type of endpoint plugin is to be loaded. The system is now initialized, and from this point onwards, events may be generated by user interactions with the web page, or scripting associated with the web page, or callback requests from the client endpoint device 205. At step 616, the stub plugin 324 waits for an event, and processes it according to a particular path before returning to step 616 to wait for another event.

At step 618, the stub plugin 324 receives a callback RPC from client endpoint device 205, and in step 620 the stub plugin 324 unmarshals (converts and disassembles) the RPC into parameters and generates a plugin API callback to the browser (e.g., HTML rendering engine 322) via plugin API 326. In step 622, the stub plugin 324 receives an API callback response, and at step 624 the callback results are marshaled (converted and assembled) into an RPC response, which the stub plugin 324 then sends back to the client endpoint device 205, via plugin protocol session 415, in step 626 before returning to step 616 to wait for another event.

At step 628, the stub plugin 324 receives a plugin API request from the browser (e.g., HTML rendering engine 322) via plugin API 326, and in step 630 the stub plugin marshals the parameters of the API request into an RPC request, and in step 632 sends the RPC request to client endpoint device 205 via plugin protocol session 415. In step 634, the stub plugin 324 receives an RPC response from the client endpoint device 205, unmarshals it and returns its results to the browser in step 636, before returning to step 616 to wait for another event.

At step 638, the stub plugin 324 detects a window position change, for example because the user is moving or resizing the windows in the displayed browser window 510 at the client endpoint 205, or because a host application needs to rearrange the windows, and in step 640 marshals the new window geometry, which may include information about what sections of the plugin window 535 are overlapped, into an RPC in step 640. The stub plugin 324 sends the RPC to the client endpoint device 205, via plugin protocol session 415, in step 642. In step 644, the stub plugin 324 receives an RPC confirmation from the client endpoint device 205 confirming that the RPC was processed, and then returns to step 616 to wait for another event.

At step 646, the stub plugin 324 receives a plugin API notification to unload the web page from the browser (e.g., HTML rendering engine 322) via plugin API 326, and in step 648 the stub plugin 324 creates an unload RPC and sends it to the client endpoint device 205, via plugin protocol session 415, in step 650. In step 652, the stub plugin 324 receives an RPC confirmation from the client endpoint device 205 confirming that the unload RPC was processed, and then the stub plugin 324 exits process 600 at step 654. At exit, the plugin protocol session 415 may or may not be terminated, depending on the particular embodiment. For example, if the user is still active, whether in the browser or another application, then the plugin protocol session 415 may be kept active until the browser is closed, the VDI session 405 is terminated, etc.

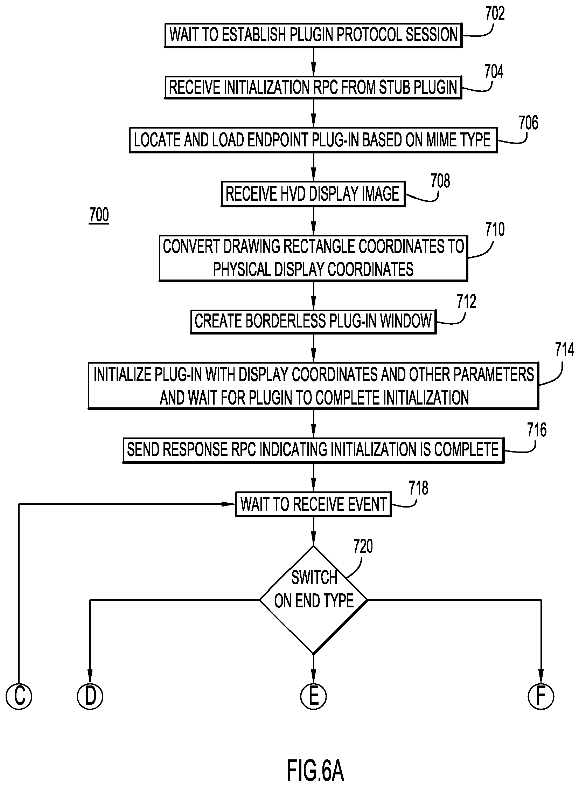

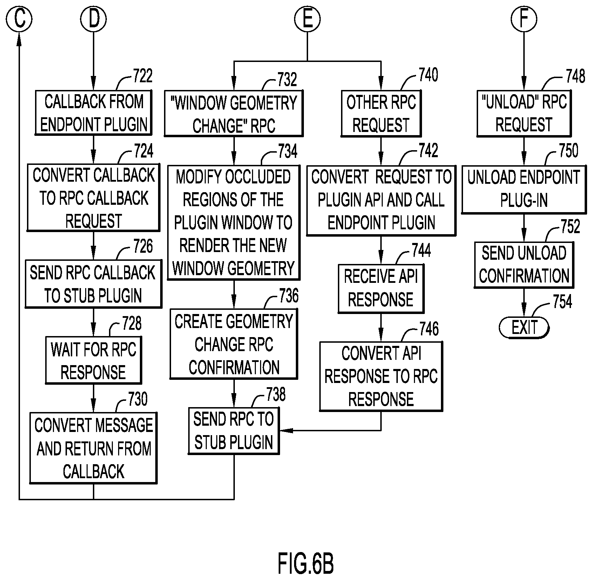

FIGs. 6A and 6B illustrate an example of a flow chart generally depicting process 700 for the establishment and operation of plugin protocol session 415 by a plugin server 360 at the client endpoint device 205. The process 700 described herein is an example where the client endpoint device 205 and client operating system 355 are capable of processing regions of occluded media so as to produce a display 505a of FIG. 4A, but it is understood that the process 700 is not so limited, and may be used in the alternate embodiments of FIG. 4B with such minor adaptations as may be needed for such embodiments.

In step 702, the plugin server 360 waits until a plugin protocol session 415 is established. This step may entail verifying the credentials of the stub plugin 324 and responding to the session establishment request. It will be understood that the transport of protocol session 415 may take many embodiments, including, but not limited to, use of HTTP, TLS, TCP, or multiplexing onto a virtual channel of VDI session 405. Once the session is established, then in step 704 the plugin server 360 receives an initialization RPC request, which contains both the initialization parameters (e.g., window coordinates and size) from plugin API 326, and additional parameters (e.g., the MIME type) indicating which type of endpoint plugin is to be loaded, from the stub plugin 324. In step 706, the plugin server 360 uses the information in the initialization request, to locate and load the desired type of endpoint plugin 370.

At step 708, the plugin server 360 receives an HVD display image 500 from the HVD 150, where the HVD display comprises at least one client window element placeholder 530. The plugin server 360 may receive the HVD display image via VDI client 350 and the VDI session 405. The HVD display image may be transported as a single window comprising the entire HVD display image, or as a separate virtual image for each hosted virtual application, or a combination of the two.

In step 710, based on the initialization parameters, the plugin server 360 converts the drawing rectangle coordinates and size contained in the initialization RPC to coordinates suitable for the display 250 associated with client endpoint device 205. In step 712, the plugin server 360 creates a borderless window, that is, a drawing rectangle or a window with no framing decorations associated with it, for the plugin display window 535 as specified by the initialization. At this time, a list of regions occluding the drawing rectangle may also be received and processed. In sum, the drawing rectangle and occlusion information allows plugin server 360 to interact with operating system 355 to display only those portions of the data rendered by endpoint plugin 370 that are currently visible in the HVD display.

In step 714, the plugin server 360 initializes the endpoint plugin 370 via client plugin API 365 with the coordinates of the plugin display window 535 and other parameters from the initialization request, and, after waiting for the plugin to indicate that initialization was completed, in step 716 sends a response RPC to the stub plugin 324 indicating that initialization has completed. The system is now initialized, and from this point onwards, events may be generated by user interactions with the web page, or scripting associated with the web page, or requests from the stub plugin 324. At step 718, the plugin server 360 waits for an event, and at step 720 processes it according to a particular path before returning to step 718 to wait for another event.

At step 722, the plugin server 360 receives an API callback from the endpoint plugin 370, and in step 724 the plugin server 360 marshals the callback into an RPC callback request and at step 726 sends the RPC callback request, via plugin protocol session 415, to the stub plugin 324. At step 728 the plugin server 360 waits for an RPC response from the stub plugin 324, and upon receipt, ummarshals the RPC into parameters and generates a plugin API return to the endpoint plugin 370 at step 730, before returning to step 718 to wait for another event.

At step 732, the plugin server 360 receives an RPC specifying a window geometry change from the stub plugin 324. The RPC may include information about what sections of the plugin window 535 are overlapped or occluded, as well as any position or size changes of the actual plugin window 535 itself. In step 734 the plugin server 360 modifies the list of regions occluding endpoint-rendered user element 535 as needed to correspond with the received RPC, for example by informing the operating system 35 which areas of endpoint-rendered plugin window 535 should be rendered. In step 736 the plugin server 360 creates an RPC confirmation confirming that the window geometry change RPC was processed, and sends it to the stub plugin 324, via plugin protocol session 415, in step 738, before returning to step 718 to wait for another event.

At step 740, the plugin server 360 receives an RPC request from the stub plugin 324, and in step 742 unmarshals the RPC into parameters and generates a client plugin API call to the endpoint plugin 370 via client plugin API 365. At step 744 the plugin server 360 receives an API callback response, and at step 746 marshals the callback response into an RPC response, which the plugin server 360 then sends back to the stub plugin 324 in step 738 before returning to step 718 to wait for another event.

At step 748, the plugin server 360 receives an unload RPC request from the stub plugin 324, and in step 750 the plugin server 360 unloads the endpoint plugin 370. In step 752, the plugin server 360 sends an RPC confirmation confirming that the unload RPC was processed to the stub plugin 324, and then exits process 700 at step 754. At exit, the plugin protocol session 415 may or may not be terminated, depending on the particular embodiment. For example, if the user is still active, whether in the browser or another application, then the plugin protocol session 415 may be kept active until the browser is closed, the VDI session 405 is terminated, etc.

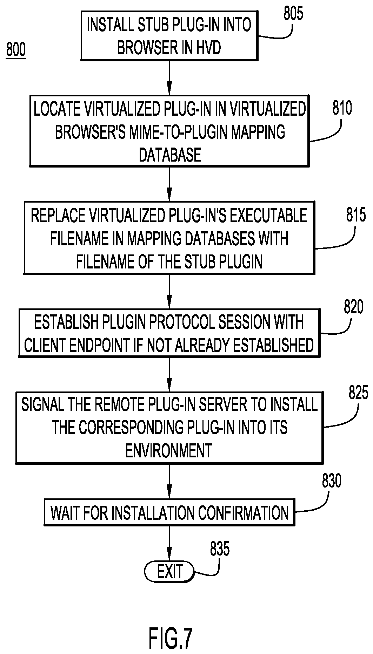

FIG. 7 is an example of a flow chart generally depicting process 800 for the conversion of a hosted web browser 320 to use stub plugin 324 and one or more endpoint plugins 370 in order to integrate rendering of tags referencing one or more specific MIME types, such as streaming media into a browser window displayed on a client endpoint device. Process 800 may be performed by an installation module or wizard, by a script triggered, e.g., by a system administrator, or in any other suitable fashion. At step 805, the stub plugin 324 is installed into the web browser 320 on the HVD 150. At step 810, the MIME-to-file mapping database 330 is queried to search for the records associated with the MIME types that are to be executed by the client endpoint device 205, and each record found is modified in step 815 by, e.g., replacing the filenames of the native executable virtualized plugins with the filename of the stub plugin 324. At step 820, a plugin protocol session 415 is established with the client endpoint device 205, if it is not already established, and at step 825 an RPC is sent to the plugin server 360, requesting that it install the appropriate endpoint plugins 370 into its environment, to process tags with the specified MIME types. At step 830, the process waits for confirmation that the installation occurred successfully on the client endpoint device 205, and then the process terminates at step 835.

In sum, techniques are provided herein for establishing an integrated rendering of a browser window comprising user interface elements such as streaming media on a client endpoint device. A hosted web browser on an HVD draws a Hosted Virtual Desktop (HVD) image of a browser window and communicates it to the client endpoint device for display, the HVD display comprising at least one host-provided window element and at least one placeholder where client-provided data associated with a tag may be rendered. A client plugin server instantiates an endpoint browser plugin to render a tag in place of a portion of the HVD image before displaying an integrated display of the browser window and rendered tag content at the client endpoint device.

The above description is intended by way of example only. The description of has been presented for purposes of illustration and description, but is not intended to be exhaustive or limited to the embodiments in the form disclosed. Many modifications and variations will be apparent to those of ordinary skill in the art.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

With respect to the Figures, which illustrate the architecture, functionality, and operation of possible implementations of methods, apparatuses, and computer readable media encoded with instructions, each block in the flowcharts or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometime be executed in the reverse order, depending on the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

## Claims

1. A method comprising:
establishing a plugin element (360) on a client endpoint device (205), wherein the plugin element comprises a software module configured to communicate with browser plugins at the client endpoint device;
receiving a Hosted Virtual Desktop (HVD) display comprising a browser window (510) from a HVD host (105) at the client endpoint device, the browser window comprising a host-provided window element (520) and a placeholder (530) where a client-provided plugin display window may be rendered;
receiving at the plugin element from the HVD host an initialisation request indicating a type of endpoint browser plugin to be instantiated on the client endpoint device;
instantiating, by the plugin element, an endpoint browser plugin (370) in accordance with the indicated type;
receiving data from a web content server (30, 35) at the endpoint browser plugin;
generating a client endpoint display by rendering the HVD display and by the endpoint browser plugin rendering the received data as a client-provided plugin display window (535) in place of the placeholder of the HVD display; and
displaying the client endpoint display to enable a user of the client endpoint device to simultaneously view the host-provided window element and the client-provided plugin display window in a composited window.

2. The method of claim 1, further comprising:
communicating the data between the client device and the web content server without passing through the HVD host.

3. The method of claim 1, wherein the received data is media data.

4. The method of claim 1, further comprising:
establishing a plugin protocol session (415) between the plugin element (360) and a stub plugin (324) on the HVD host.

5. The method of claim 4, further comprising:
the plugin element receiving placeholder information from the stub plugin via the plugin protocol session, wherein the placeholder information comprises one or more of the following:
a Uniform Resource Identifier (URI) describing the location of the web content server; and
window geometry information that enables the endpoint browser plugin to render the plugin display window in place of the placeholder.

6. The method of claim 4, further comprising
the plugin element receiving a client Application Programming Interface (API) request from the endpoint browser plugin and sending the client API request to the stub plugin via the plugin protocol session; and
the plugin element receiving a host API request from the stub plugin via the plugin protocol session and sending the host API request to the endpoint browser plugin, optionally wherein the client and host API requests are Netscape Plugin API (NPAPI) requests, Pepper Plugin API (PPAPI) requests, or ActiveX API requests.

7. The method of claim 1, further comprising:
establishing a Virtual Desktop Interface (VDI) session (405) between a VDI client in the client endpoint device and a VDI server in the HVD, wherein the plugin protocol session is transported as a virtual channel in the VDI session.

8. The method of claim 1, wherein the HVD display further comprises an application window, wherein the placeholder may be partially or fully occluded by the application window in the HVD display, optionally wherein said generation of the client endpoint display further comprises:
the endpoint browser plugin rendering the plugin display window only if the placeholder is not occluded by the application window; and
the endpoint browser plugin pausing the rendering of the plugin display window when the placeholder is fully or partially occluded by the application window or optionally wherein said generation of the client endpoint display further comprises the endpoint browser plugin rendering the plugin display window in place of the portion of the placeholder that is not occluded by the application window.

9. The method of claim 1, further comprising:
receiving, when the endpoint browser plugin is in focus, user input from an input device associated with the client endpoint device; and
processing, by the endpoint browser plugin, the received user input.

10. A method comprising:
in a web browser (320) on a Hosted Virtual Desktop (HVD) host (105), rendering a web page comprising page content and a tag that references data and a plugin object;
instantiating, in the web browser, a stub plugin (324) in lieu of the plugin object referenced by said tag;
sending by the stub plugin an initialisation request to a client endpoint device (205); the initialisation request indicating a type of an endpoint browser plugin to be instantiated on the client endpoint device for rendering the tag at the client endpoint device;
generating an HVD display comprising a browser window (510), the browser window comprising a host-provided window element (520) in which the web browser renders the page content and a placeholder (530) where the endpoint browser plugin on the client endpoint device can render the tag; and
sending the HVD display to the client endpoint device (205) using a Virtual Desktop Interface (VDI) session (405).

11. The method of claim 10, further comprising:
establishing a plugin protocol session (415) between the stub plugin and a plugin element on the client endpoint device.

12. The method of claim 11, wherein the tag comprises a Multipurpose Internet Mail Extension (MIME) attribute that specifies a MIME type for the tag, and said rendering the web page further comprises:
performing a lookup in a mapping database (330) to find a record associated with the MIME type of the tag, the record comprising a location of the stub plugin, and indicia of an associated endpoint browser plugin (370) on the client endpoint device capable of rendering the MIME type; and
sending the initialization request to the plugin element via the plugin protocol session, wherein the initialization request instructs the plugin element to instantiate the associated endpoint browser plugin on the client endpoint device so that the endpoint browser plugin can render the tag.

13. The method of claim 11, further comprising:
generating placeholder information; and
sending, by the stub plugin, the placeholder information to the plugin element via the plugin protocol session, wherein the placeholder information comprises one or more of the following:
a Uniform Resource Identifier (URI) describing the location of a web content server where the data referenced by the tag is located; and
window geometry information that enables the endpoint browser plugin to render the data referenced by the tag in place of the placeholder, or the method of claim 11, further comprising:
the stub plugin receiving a client Application Programming Interface (API) request from the plugin element via the plugin protocol session and sending the client API request to the web browser; and
the stub plugin receiving a host API request from the web browser and sending the host API request to the plugin element via the plugin protocol session.

14. An apparatus comprising:
a display device; and
a processor configured to perform a method according to any of claims 1 to 9 or an apparatus comprising:
a memory; and
a processor configured to perform a method according to any of claims 10 to 13.

15. One or more computer readable media encoded with instructions that, when executed by a processor, cause the processor to perform a method according to any of claims 1 to 13.

## Patentansprüche

1. Verfahren, das Folgendes beinhaltet:
Einrichten eines Plugin-Elements (360) an einem Client-Endpunktgerät (205), wobei das Plugin-Element ein Software-Modul umfasst, konfiguriert zum Kommunizieren mit Browser-Plugins an dem Client-Endpunktgerät;
Empfangen einer HVD-(Hosted Virtual Desktop)-Anzeige, die ein Browser-Fenster (510) umfasst, von einem HVD-Host (105) am Client-Endpunktgerät, wobei das Browser-Fenster ein vom Host bereitgestelltes Fensterelement (520) und einen Platzhalter (530) umfasst, wo ein vom Client bereitgestelltes Plugin-Anzeigefenster dargestellt werden kann;
Empfangen, am Plugin-Element vom HVD-Host, einer Initialisierungsanforderung, die einen Typ von Endpunkt-Browser-Plugin anzeigt, zur Instanziierung auf dem Client-Endpunktgerät;
Instanziieren, durch das Plugin-Element, eines Endpunkt-Browser-Plugin (370) gemäß dem angezeigten Typ;
Empfangen von Daten von einem Webinhaltsserver (30, 35) am Endpunkt-Browser-Plugin;
Erzeugen einer Client-Endpunktanzeige durch Darstellen der HVD-Anzeige und indem das Endpunkt-Browser-Plugin die empfangenen Daten als vom Client bereitgestelltes Plugin-Anzeigefenster (535) anstelle des Platzhalters des HVD-Display darstellt; und
Anzeigen der Client-Endpunktanzeige, um es einem Benutzer des Client-Endpunktgeräts zu ermöglichen, gleichzeitig das vom Host bereitgestellte Fensterelement und das vom Client bereitgestellte Plugin-Anzeigefenster in einem zusammengesetzten Fenster zu betrachten.

2. Verfahren nach Anspruch 1, das ferner Folgendes beinhaltet:
Übermitteln der Daten zwischen dem Client-Gerät und dem Webinhaltsserver, ohne durch den HVD-Host zu passieren.

3. Verfahren nach Anspruch 1, wobei die empfangenen Daten Mediendaten sind.

4. Verfahren nach Anspruch 1, das ferner Folgendes beinhaltet:
Einrichten einer Plugin-Protokollsitzung (415) zwischen dem Plugin-Element (360) und einem Stub-Plugin (324) auf dem HVD-Host.

5. Verfahren nach Anspruch 4, das ferner Folgendes beinhaltet:
Empfangen, durch das Plugin-Element, von Platzhalterinformationen vom Stub-Plugin über die Plugin-Protokollsitzung, wobei die Platzhalterinformationen eines oder mehrere der Folgenden beinhalten:
einen URI (Uniform Resource Identifier), der den Ort des Webinhaltsservers beschreibt; und
Fenstergeometrieinformationen, die es ermöglichen, dass das Endpunkt-Browser-Plugin das Plugin-Anzeigefesnter anstelle des Platzhalters darstellt.

6. Verfahren nach Anspruch 4, das ferner Folgendes beinhaltet:
Empfangen, durch das Plugin-Element, einer Client-API-(Application Programming Interface)-Anforderung vom Endpunkt-Browser-Plugin und Senden der Client-API-Anforderung zum Stub-Plugin über die Plugin-Protokollsitzung; und
Empfangen, durch das Plugin-Element, einer Host-API-Anforderung vom Stub-Plugin über die Plugin-Protokollsitzung und Senden der Host-API-Anforderung zum Endpunkt-Browser-Plugin, wobei die Client- und Host-API-Anforderung optional NPAPI-(Netscape Plugin API)-Anforderungen, PPAPI-(Pepper Plugin API)-Anforderungen oder ActiveX API-Anforderungen sind.

7. Verfahren nach Anspruch 1, das ferner Folgendes beinhaltet:
Einrichten einer VDI-(Virtual Desktop Interface)-Sitzung (405) zwischen einem VDI-Client im Client-Endpunktgerät und einem VDI-Server im HVD, wobei die Plugin-Protokollsitzung als virtueller Kanal in der VDI-Sitzung transportiert wird.

8. Verfahren nach Anspruch 1, wobei das HVD-Display ferner ein Anwendungsfenster umfasst, wobei der Platzhalter ganz oder teilweise durch das Anwendungsfenster im HVD-Display verdeckt werden kann, wobei das genannte Erzeugen der Client-Endpunktanzeige optional ferner Folgendes beinhaltet:
Darstellen, durch den Endpunkt-Browser-Plugin, des Plugin-Anzeigefensters nur dann, wenn der Platzhalter nicht vom Anwendungsfenster verdeckt wird; und
Pausieren, durch den Endpunkt-Browser-Plugin, des Darstellens des Plugin-Anzeigefensters, wenn der Platzhalter ganz oder teilweise durch das Anwendungsfenster verdeckt wird, oder wobei das genannte Erzeugen der Client-Endpunktanzeige optional ferner beinhaltet, dass das Endpunkt-Browser-Plugin das Plugin-Anzeigefenster anstelle des Teils des Platzhalters darstellt, der nicht vom Anwendungsfenster verdeckt wird.

9. Verfahren nach Anspruch 1, das ferner Folgendes beinhaltet:
Empfangen, wenn das Endpunkt-Browser-Plugin im Fokus ist, von Benutzereingaben von einem mit einem Client-Endpunktgerät assoziierten Eingabegerät; und
Verarbeiten, durch das Endpunkt-Browser-Plugin, der empfangenen Benutzereingabe.

10. Verfahren, das Folgendes beinhaltet:
Darstellen, in einem Web-Browser (320) auf einem HVD-(Hosted Virtual Desktop)-Host (105), einer Webseite, die Seiteninhalt und einen Tag umfasst, der Daten und ein Plugin-Objekt referenziert;
Instanziieren, im Web-Browser, eines Stub-Plugin (324) anstelle des von dem genannten Tag referenzierten Plugin-Objekts;
Senden, durch das Stub-Plugin, einer Initialisierungsanforderung zu einem Client-Endpunktgerät (205); wobei die Initialisierungsanforderung einen Typ eines Endpunkt-Browser-Plugin anzeigt, der auf dem Client-Endpunktgerät zu instanziieren ist, zum Darstellen des Tag am Client-Endpunktgerät;
Erzeugen eines HVD-Display, das ein Browser-Fenster (510) umfasst, wobei das Browser-Fenster ein vom Host bereitgestelltes Fensterelement (520) umfasst, in dem der Web-Browser den Seiteninhalt und einen Platzhalter (530) darstellt, wobei das Endpunkt-Browser-Plugin auf dem Client-Endpunktgerät den Tag darstellen kann; und
Senden der HVD-Anzeige zum Client-Endpunktgerät (205) mittels einer VDI-(Virtual Desktop Interface)-Sitzung (405).

11. Verfahren nach Anspruch 10, das ferner Folgendes beinhaltet:
Einrichten einer Plugin-Protokollsitzung (415) zwischen dem Stub-Plugin und einem Plugin-Element auf dem Client-Endpunktgerät.

12. Verfahren nach Anspruch 11, wobei der Tag ein MIME-(Multipurpose Internet Mail Extension)-Attribut ist, das einen MIME-Typ für den Tag vorgibt, und das genannte Darstellen der Webseite ferner Folgendes beinhaltet:
Durchführen eines Lookup in einer Mapping-Datenbank (330) zum Finden eines mit dem MIME-Typ des Tag assoziierten Datensatzes, wobei der Datensatz einen Ort des Stub-Plugin umfasst, und Indizien eines assoziierten Endpunkt-Browser-Plugin (370) auf dem Client-Endpunktgerät, das den MIME-Typ darstellen kann; und
Senden der Initialisierungsanforderung zum Plugin-Element über die Plugin-Protokollsitzung, wobei die Initialisierungsanforderung das Plugin-Element anweist, das assoziierte Endpunkt-Browser-Plugin auf dem Client-Endpunktgerät so zu instanziieren, dass das Endpunkt-Browser-Plugin den Tag darstellen kann.

13. Verfahren nach Anspruch 11, das ferner Folgendes beinhaltet:
Erzeugen von Platzhalterinformationen; und
Senden, durch den Stub-Plugin, der Platzhalterinformationen zum Plugin-Element über die Plugin-Protokollsitzung, wobei die Platzhalterinformationen eines oder mehrere der Folgenden beinhalten:
einen URI (Uniform Resource Identifier), der den Ort eines Webinhaltsservers beschreibt, wo sich die von dem Tag referenzierten Daten befinden; und
Fenstergeometrieinformationen, die es ermöglichen, dass das Endpunkt-Browser-Plugin die vom Tag referenzierten Daten anstelle des Platzhalters darstellen, oder Verfahren nach Anspruch 11, das ferner Folgendes beinhaltet:
Empfangen, durch das Stub-Plugin, der Client-API-(Application Programming Interface)-Anforderung vom Plugin-Element über die Plugin-Protokollsitzung und Senden der Client-API-Anforderung zum Web-Browser; und
Empfangen, durch das Stub-Plugin, einer Host-API-Anforderung vom Weg-Browser und Senden der Host-API-Anforderung zum Plugin-Element über die Plugin-Protokollsitzung.

14. Vorrichtung, die Folgendes umfasst:
ein Anzeigegerät; und
einen Prozessor, konfiguriert zum Durchführen eines Verfahrens nach einem der Ansprüche 1 bis 9, oder eine Vorrichtung, die Folgendes umfasst:
einen Speicher; und
einen Prozessor, konfiguriert zum Durchführen eines Verfahrens nach einem der Ansprüche 10 bis 13.

15. Ein oder mehrere computerlesbare Medien, auf denen Befehle codiert sind, die bei Ausführung durch einen Prozessor bewirken, dass der Prozessor ein Verfahren nach einem der Ansprüche 1 bis 13 durchführt.

## Revendications

1. Procédé comprenant :
l'établissement d'un élément de plugiciel (360) sur un dispositif de point d'extrémité client (205), dans lequel l'élément de plugiciel comprend un module logiciel configuré pour communiquer avec des plugiciels de navigation au niveau du dispositif de point d'extrémité client ;
la réception d'un affichage de bureau virtuel hébergé (HVD) comprenant une fenêtre de navigation (510) depuis un hôte HVD (105) au niveau du dispositif de point d'extrémité client, la fenêtre de navigation comprenant un élément de fenêtre fourni par l'hôte (520) et un paramètre fictif (530) où une fenêtre d'affichage de plugiciel fournie par le client peut être rendue ;
la réception au niveau de l'élément de plugiciel depuis l'hôte HVD d'une demande d'initialisation indiquant un type de plugiciel de navigation de point d'extrémité à instancier sur le dispositif de point d'extrémité client ;
l'instanciation, par l'élément de plugiciel, d'un plugiciel de navigation de point d'extrémité (370) conformément au type indiqué ;
la réception de données depuis un serveur de contenu Web (30, 35) au niveau du plugiciel de navigation de point d'extrémité ;
la génération d'un affichage de point d'extrémité client en rendant l'affichage HVD et par le plugiciel de navigation de point d'extrémité le rendu des données reçues sous forme de fenêtre d'affichage de plugiciel fournie par le client (535) à la place du paramètre fictif de l'affichage HVD ; et
l'affichage de l'affichage de point d'extrémité client pour permettre à l'utilisateur du dispositif de point d'extrémité client de visualiser simultanément l'élément de fenêtre fourni par l'hôte et la fenêtre d'affichage de plugiciel fournie par le client dans une fenêtre composite.

2. Procédé selon la revendication 1, comprenant en outre :
la communication des données entre le dispositif client et le serveur de contenu Web sans passer par l'hôte HVD.

3. Procédé selon la revendication 1, dans lequel les données reçues sont des données multimédia.

4. Procédé selon la revendication 1, comprenant en outre :
l'établissement d'une session de protocole de plugiciel (415) entre l'élément de plugiciel (360) et un plugiciel souche (324) sur l'hôte HVD.

5. Procédé selon la revendication 4, comprenant en outre :
la réception par l'élément de plugiciel d'informations de paramètre fictif depuis le plugiciel souche par l'intermédiaire de la session de protocole de plugiciel, dans lequel les informations de paramètre fictif comprennent une ou plusieurs des informations suivantes :
un identifiant URI décrivant l'emplacement du serveur de contenu Web ; et
des informations de géométrie de fenêtre qui permettent au plugiciel de navigation de point d'extrémité de rendre la fenêtre d'affichage de plugiciel à la place du paramètre fictif.

6. Procédé selon la revendication 4, comprenant en outre par l'élément de plugiciel la réception d'une demande d'interface de programmation d'application (API) client depuis le plugiciel de navigation de point d'extrémité et l'envoi de la demande d'API client au plugiciel souche par l'intermédiaire de la session de protocole de plugiciel ; et
par l'élément de plugiciel la réception d'une demande d'API hôte depuis le plugiciel souche par l'intermédiaire de la session de protocole de plugiciel et l'envoi de la demande d'API hôte au plugiciel de navigation de point d'extrémité, facultativement dans lequel les demandes d'API client et hôte sont des demandes NPAPI (Netscape Plugin API), des demandes PPAI (Pepper Plugin API), ou des demandes ActiveX API.

7. Procédé selon la revendication 1, comprenant en outre :
l'établissement d'une session d'interface de bureau virtuelle (VDI) (405) entre un client VDI dans le dispositif de point d'extrémité client et un serveur VDI dans le HVD, dans lequel la session de protocole de plugiciel est transportée en tant que canal virtuel dans la session VDI.

8. Procédé selon la revendication 1, dans lequel l'affichage HVD comprend en outre une fenêtre d'application, dans lequel le paramètre fictif peut être partiellement ou entièrement occulté par la fenêtre d'application dans l'affichage HVD, facultativement dans lequel ladite génération de l'affichage de point d'extrémité client comprend en outre :
le rendu par le plugiciel de navigation de point d'extrémité de la fenêtre d'affichage de plugiciel uniquement si le paramètre fictif n'est pas occulté par la fenêtre d'application ; et
la pause par le plugiciel de navigation de point d'extrémité du rendu de la fenêtre d'affichage de plugiciel quand le paramètre fictif est entièrement ou partiellement occulté par la fenêtre d'application ou facultativement dans lequel ladite génération de l'affichage de point d'extrémité client comprend en outre le rendu par le plugiciel de navigation de point d'extrémité de la fenêtre d'affichage de plugiciel à la place de la partie du paramètre fictif qui n'est pas occultée par la fenêtre d'application.

9. Procédé selon la revendication 1, comprenant en outre :
la réception, quand le plugiciel de navigation de point d'extrémité est mis au point, d'une entrée d'utilisateur depuis un dispositif d'entrée associé au dispositif de point d'extrémité client ; et
le traitement, par le plugiciel de navigation de point d'extrémité, de l'entrée d'utilisateur reçue.

10. Procédé comprenant :
dans un navigateur Web (320) sur un hôte de bureau virtuel hébergé (HVD) (105), le rendu d'une page Web comprenant un contenu de page et une balise qui fait référence à des données et à un objet de plugiciel ;
l'instanciation, dans le navigateur Web, d'un plugiciel souche (324) au lieu de l'objet de plugiciel référencé par ladite balise ;
l'envoi par le plugiciel souche d'une demande d'initialisation à un dispositif de point d'extrémité client (205) ; la demande d'initialisation indiquant un type de plugiciel de navigation de point d'extrémité à instancier sur le dispositif de point d'extrémité client pour rendre la balise au niveau du dispositif de point d'extrémité client ;
la génération d'un affichage HVD comprenant une fenêtre de navigation (510), la fenêtre de navigation comprenant un élément de fenêtre fourni par l'hôte (520) dans lequel le navigateur Web rend le contenu de page et un paramètre fictif (530) où le plugiciel de navigation de point d'extrémité sur le dispositif de point d'extrémité client peut rendre la balise ; et
l'envoi de l'affichage HVD au dispositif de point d'extrémité client (205) à l'aide d'une session d'interface de bureau virtuel (VDI) (405).

11. Procédé selon la revendication 10, comprenant en outre :
l'établissement d'une session de protocole de plugiciel (415) entre le plugiciel souche et un élément de plugiciel sur le dispositif de point d'extrémité client.

12. Procédé selon la revendication 11, dans lequel la balise comprend un attribut MIME (Multipurpose Internet Mail Extension) qui spécifie un type de MIME pour la balise, et ledit rendu de la page Web comprend en outre :
l'exécution d'une consultation dans une base de données de mises en correspondance (330) pour trouver un enregistrement associé au type de MIME de la balise, l'enregistrement comprenant un emplacement du plugiciel souche, et des repères d'un plugiciel de navigation de point d'extrémité associé (370) sur le dispositif de point d'extrémité client capable de rendre le type de MIME ; et
l'envoi de la demande d'initialisation à l'élément de plugiciel par l'intermédiaire de la session de protocole de plugiciel, dans lequel la demande d'initialisation ordonne à l'élément de plugiciel d'instancier le plugiciel de navigation de point d'extrémité associé sur le dispositif de point d'extrémité client de telle sorte que le plugiciel de navigation de point d'extrémité puisse rendre la balise.

13. Procédé selon la revendication 11, comprenant en outre :
la génération d'informations de paramètre fictif ; et
l'envoi, par le plugiciel souche, des informations de paramètre fictif à l'élément de plugiciel par l'intermédiaire de la session de protocole de plugiciel, dans lequel les informations de paramètre fictif comprennent une ou plusieurs des informations suivantes :
un identifiant URI décrivant l'emplacement du serveur de contenu Web ; et
des informations de géométrie de fenêtre qui permettent au plugiciel de navigation de point d'extrémité de rendre la fenêtre d'affichage de plugiciel à la place du paramètre fictif, ou procédé selon la revendication 11, comprenant en outre :
par l'élément de plugiciel la réception d'une demande d'interface de programmation d'application (API) client depuis l'élément de plugiciel par l'intermédiaire de la session de protocole de plugiciel et l'envoi de la demande d'API client au navigateur Web ; et
par l'élément de plugiciel la réception d'une demande d'API hôte depuis le navigateur Web et l'envoi de la demande d'API hôte à l'élément de plugiciel par l'intermédiaire de la session de protocole de plugiciel.

14. Appareil comprenant :
un dispositif d'affichage ; et
un processeur configuré pour exécuter un procédé selon l'une quelconque des revendications 1 à 9 ou appareil comprenant :
une mémoire ; et
un processeur configuré pour exécuter un procédé selon l'une quelconque des revendications 10 à 13.

15. Un ou plusieurs supports lisibles par ordinateur codés avec des instructions qui, à leur exécution par un processeur, amènent le processeur à exécuter un procédé selon l'une quelconque des revendications 1 à 13.
